# EUROPÄISCHE PATENTSCHRIFT

(11) **EP 3 616 495 B1**
(45) Veröffentlichungstag und Bekanntmachung des Hinweises auf die Patenterteilung: **03.08.2022**
(21) Anmeldenummer: 19194840.5
(22) Anmeldetag: 02.09.2019
(51) Int. Cl.: A01D 34/86, A01B 59/00

(54) **BEFESTIGUNGSMECHANISMUS FÜR EINE ZERKLEINERUNGS- / SCHNEIDVORRICHTUNG FÜR PFLANZENMATERIAL AN EINEM FAHRZEUG, INSBESONDERE EINEM TRAKTOR ODER ÄHNLICHEM**
FASTENING MECHANISM FOR A CRUSHING / CUTTING DEVICE FOR PLANT MATERIAL ON A VEHICLE, ESPECIALLY A TRACTOR OR SIMILAR
MÉCANISME DE FIXATION POUR UN DISPOSITIF DE BROYAGE / DE COUPE POUR MATIÈRE VÉGÉTALE SUR UN VÉHICULE, EN PARTICULIER UN TRACTEUR OU ANALOGUE

(30) Priorität: 03.09.2018 IT 201800008287
(43) Veröffentlichungstag der Anmeldung: 04.03.2020
(73) Patentinhaber: Seppi M. spa-AG, 39052 Caldaro (IT)
(72) Erfinder: SEPPI, Lorenz, 39052 Caldaro (IT)
(74) Vertreter: Ausserer, Anton

(56) Entgegenhaltungen:
- EP-A1- 2 617 278
- FR-A1- 2 843 677
- FR-A1- 2 977 123
- US-A1- 2015 189 831

## Beschreibung

Die vorliegende Erfindung betrifft einen Befestigungsmechanismus für eine Vorrichtung zum Zerkleinern / Schneiden von Pflanzenmaterial an einem Fahrzeug, insbesondere einem Traktor oder ähnlichem.

Aus der EP 1 266 551 ist ein Anbau für eine Vorrichtung an einem Fahrzeug bekannt, bei dem ein Anbaublock mit einem Arbeitswerkzeug verbunden wird und einem diese beiden verbindenden Arm um eine vertikale Achse drehbar ist. Weiterhin kann der Arm auch um eine horizontale Achse orientiert werden und ein Führungselement verbindet den Abbaublock, das Arbeitswerkzeug und / oder den Orientierungsarm, so dass das Führungselement in der Ausgangsposition des Werkzeugs keine horizontale oder vertikale Achse mit dem Orientierungsarm bildet.

Die EP 3 216 337 beschreibt eine Vorrichtung zum Zerkleinern von Pflanzenmaterial, insbesondere von Gras und / oder Sträuchern, die von einem jeweiligen Fahrzeug in einer Arbeitsposition quer zur Fahrtrichtung oder Vorschubrichtung des Fahrzeugs getragen und bewegt werden kann und eine entsprechende Ruheposition. Gemäß der Veröffentlichung EP 3 216 337 gibt es Haltemittel, die die Verwendung der Zerkleinerungsvorrichtung auf beiden Seiten des Fahrzeugs ermöglichen.

Aus der EP 2617278 ist ein Anbausystem bekannt, dieses weist Verbindungseinheiten auf, die ein deformierbares Parallelogramm bilden und nebeneinander angeordnete Verbindungsglieder umfassen, deren Enden um vertikale Drehachsen schwenkbar an einem Werkzeugabschnitt und einem Befestigungsabschnitt angebracht sind. Eine Versatzoperationseinheit stellt einen seitlichen Versatz des Werkzeugabschnitts relativ zu dem Befestigungsabschnitt durch die Glieder ein. Eines der Verbindungsglieder besteht aus einem Teleskopelement, das eine Ruhelänge aufweist, die mit einem Spiel zum Verlängern und / oder Verkürzen in Bezug auf die Länge versehen ist. Dem Element ist entlang der Länge eine Hydraulikfeder zugeordnet. Das Teleskopelement ist ein Fluid / Hydraulik / Pneumatik-Wagenheber.

Während des Gebrauchs sind diese Geräte Belastungen, Stößen und Vibrationen ausgesetzt, die durch Arbeiten und/oder Stöße gegen die Arbeitsfläche, Hindernisse und andere Gegenstände verursacht werden. Diese sind besonders schädlich, wenn der Arm ausgestreckt ist und können den gesamten Befestigungsmechanismus beschädigen

Die Aufgabe der vorliegenden Erfindung besteht darin, einen ausrichtbaren Befestigungsmechanismus vorzuschlagen, der die vorgenannten Probleme löst.

Erfindungsgemäß wird diese Aufgabe durch einen ausrichtbaren Befestigungsmechanismus für ein Fahrzeug nach Anspruch 1 gelöst.

Die Drehachsen des ersten und zweiten Arms sind zueinander im Wesentlichen parallel. Mit im Wesentlich versteht man in dieser Beschreibung +-5°.

Der erfindungsgemäße Mechanismus weist mindestens drei Befestigungspunkte auf, die ein Arbeitsfahrzeug über ein Lagersystem mit der Zerkleinerungs- und / oder Schneidvorrichtung für Pflanzenmaterial verbinden. Der erfindungsgemäße Mechanismus weist einen ersten Arm auf, der um eine im Wesentlichen vertikale Achse in Bezug auf den Rahmen des erfindungsgemäßen Mechanismus drehbar ist. Dieser erste Arm wird mittels eines einstellbaren Kolbens ausgerichtet, der im Wesentlichen in der gleichen horizontalen Ebene angeordnet ist. Der Mechanismus weist einen zweiten Arm auf, der in der gleichen Ebene wie der erste Arm angeordnet und ebenfalls in Bezug auf eine vertikale Achse drehbar ist und vorzugsweise in der Länge in Bezug auf das die Zerkleinerungsvorrichtung tragende System einstellbar ist und außerdem vorzugsweise im Wesentlichen parallel zum ersten Arm ist. Der Mechanismus hat einen dritten Arm, der in Bezug auf die beiden anderen Arme geneigt mit dem das Zerkleinerungsvorrichtung tragenden System verbunden ist. Der erste und der zweite Arm sind durch einen vierten Arm miteinander verbunden. Der vierte Arm ist über einen Stift mit dem um diesen Stift drehbaren Lagersystem mit dem Zerkleinerungssystem verbunden. Das Trägersystem ist direkt mit dem dritten Arm verbunden.

Der erste, der zweite und der dritte Arm sind gemäß einer bevorzugten Ausführungsform im Wesentlichen parallel zueinander in einer Projektionsebene angeordnet, wobei die Perspektive ein Satz von Projektionen und geometrischmathematischen Prozeduren ist, mit denen das Bild einer Figur im Raum auf einer Ebene konstruiert werden kann, die von einem Projektionszentrum in endlicher Entfernung projiziert wird. Es handelt sich also um eine zentrale oder konische Projektion.

Der dritte geneigte Arm hat eine maximale Länge, die je nach Gelände eingestellt werden kann. Auf diese Weise fährt der zweite Arm aus, wenn die Zerkleinerungsmaschine auf ein Hindernis stößt, und der dritte Arm hebt die Zerkleinerungsvorrichtung an, da er nicht ausgefahren werden kann.

Stößt das Häckselgerät auf ein Hindernis, so bewegt sich das Häckselgerät nicht nur rückwärts, sondern hebt sich gleichzeitig auch vom Boden ab. Diese Relativbewegung zum Boden wird durch den dritten Arm verursacht. Wenn die Vorrichtung auf diese Weise auf ein Hindernis trifft, werden die Tragstruktur und / oder das Betätigungsmittel nicht beschädigt. Das auf diese Weise gebildete System ermöglicht die Einstellung des Häckselgeräts und seine Ausrichtung, wodurch auch die Neigung zum Boden ermöglicht wird, was für die Bearbeitung von geneigtem Gelände nützlich sein kann, beispielsweise in der Nähe von Straßen, die häufig Hindernisse darstellen, die von der Seite nicht deutlich sichtbar sind für den Fahrzeugführer. Weitere Aufgaben, Merkmale, Vorteile und Anwendungsmöglichkeiten ergeben sich aus der nachfolgenden Beschreibung einiger Ausführungsbeispiele und der zugehörigen Zeichnung. Damit bilden alle in den Figuren beschriebenen und / oder dargestellten Merkmale für sich oder in beliebiger Kombination den hier offenbarten Gegenstand, auch unabhängig von ihrer Gruppierung in den Ansprüchen oder deren Abhängigkeiten, in denen:
Figur 1 einen Mechanismus gemäß der Erfindung mit einer Hackvorrichtung zeigt, die von einer Maschine in einer Ansicht von oben gezogen wird,

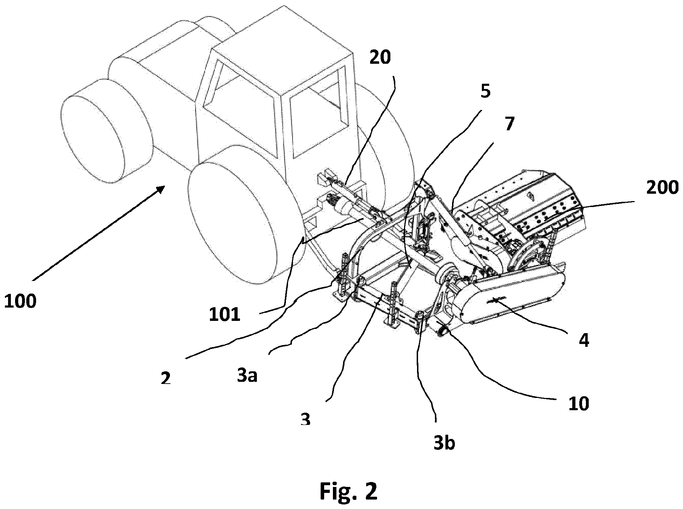

Figur 2 einen Mechanismus gemäß der Erfindung mit einer Hackvorrichtung zeigt, die von einer Maschine in einer perspektivischen Seitenansicht gezogen wird,

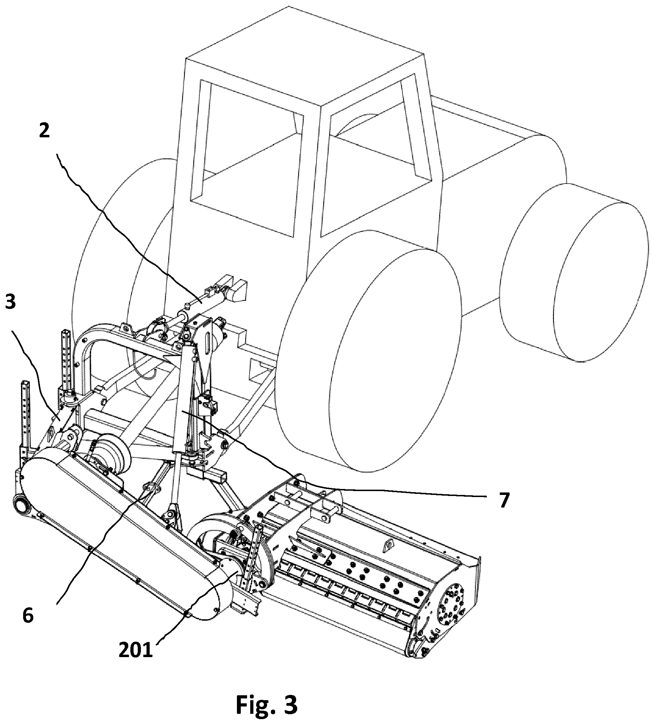

Figur 3 einen Mechanismus gemäß der Erfindung mit einer Hackvorrichtung zeigt, die von einer Maschine in einer perspektivischen Rückansicht gezogen wird,

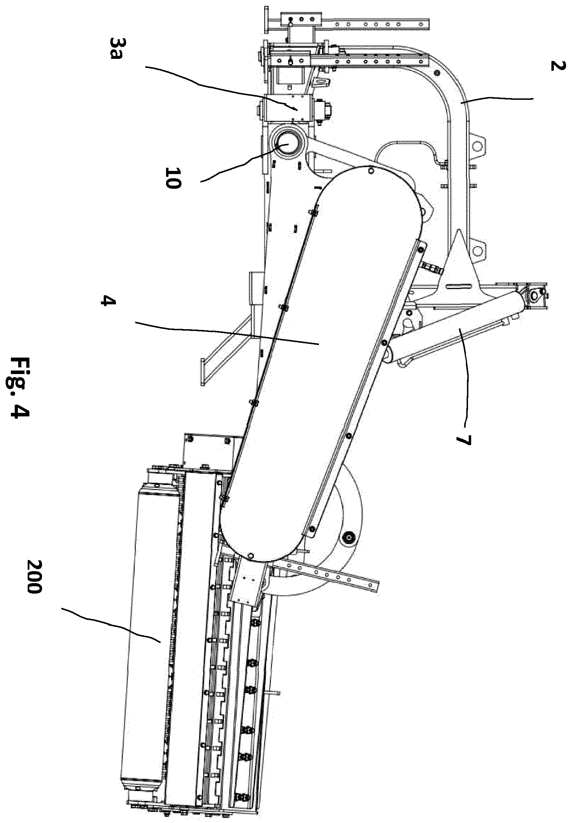

Figur 4 einen Mechanismus gemäß der Erfindung in einer Rückansicht zeigt,

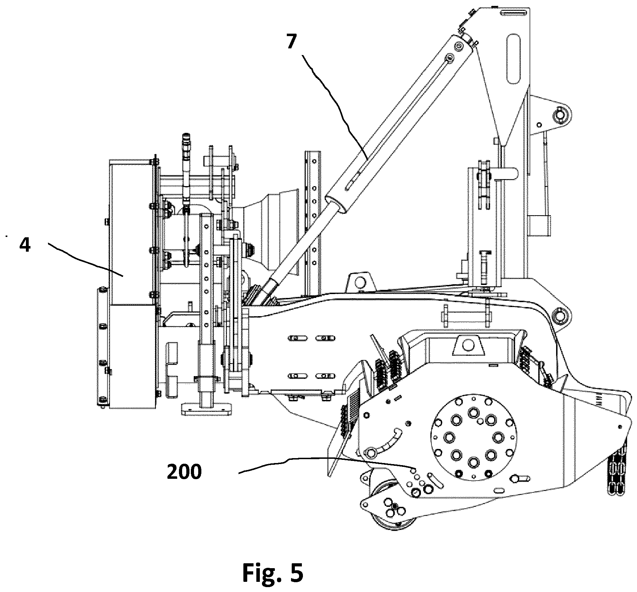

Figur 5 zeigt einen erfindungsgemäßen Mechanismus in einer Seitenansicht, und

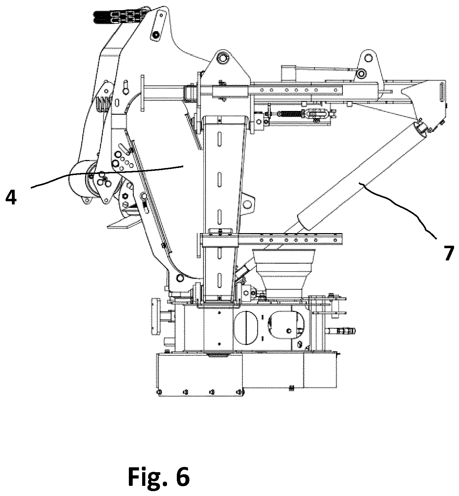

Figur 6 zeigt einen erfindungsgemäßen Mechanismus in einer Seitenansicht.

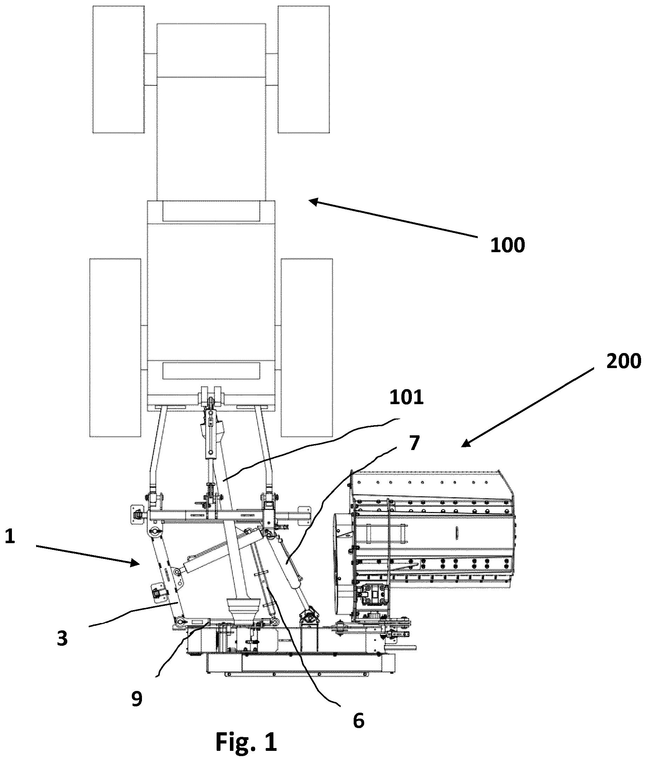

In Figur 1 bezeichnet das Bezugszeichen 100 eine Maschine, in diesem nicht einschränkenden Beispiel einen Traktor 100, an dem ein Befestigungsmechanismus 1 verbunden ist, an den eine Rasenmäher-Schneid- / Bodenbearbeitungsvorrichtung 200 verbunden ist, beispielsweise ein Werkzeughalter und / oder ein Zerkleinerer 200. In dem dargestellten Beispiel wird das Anbaugerät von dem Traktor 100 gezogen, dies ist jedoch nur ein Ausführungsbeispiel. Der Mechanismus 1 könnte auch vor dem Traktor 100 angeordnet sein. Der Traktor treibt diesen mittels einer Welle 101 an.

Der Mechanismus gemäß der Erfindung hat einen Rahmen 2, der in Bezug auf die Maschine / den Traktor 100 ausgerichtet werden kann. Ein erster Arm 3 ist mit diesem Rahmen verbunden. Dieser erste Arm 3 ist um eine Achse 3a und eine Achse 3b drehbar, die im Wesentlichen senkrecht zu dem Rahmen sind. Dieser erste Arm 3 wird beispielsweise mittels eines Kolbens 5 gedreht. Der Rahmen 2 ist mittels eines zweiten Arms 6 mit dem Trägersystem 4 verbunden. Dieser zweite Arm 6 ist im Wesentlichen parallel zum ersten Arm 3 und kann ausgefahren werden. Beide Arme sind mit einem vierten Arm 9 verbunden, der vorzugsweise in der Länge ausziehbar ist. Der vierte Arm 9 verbindet den ersten und den zweiten Arm 3,6. Der Rahmen 2 ist über mindestens einen dritten Arm 7, der gegenüber den ersten beiden Armen 3,6 geneigt ist, mit dem Trägersystem 4 verbunden. Die drei ersten Arme sind in einer bevorzugten Ausführungsform in einer perspektivischen Ebene im Wesentlichen parallel zueinander.

Der zweite Arm 6 weist Elemente auf, um einen Mindestabstand zwischen dem Rahmen 2 und dem Trägersystem 4 zu gewährleisten. Auf diese Weise bewegt sich in dem Fall, in dem das Arbeitsgerät gegen einen Gegenstand, beispielsweise einen Stein oder ein Verkehrsschild, stößt, das Lagersystem automatisch rückwärts in Bezug auf den Traktor und gleichzeitig hebt das Lagersystem 4 aufgrund des dritten Arms 7 und des zweiten Arms 6 das Arbeitsgerät 200 nach oben.

Der erste Arm kann mittels eines Kolbens 5 ausgerichtet werden.

Auf diese Weise wird nicht nur der Schlag des Arbeitsgeräts abgeschwächt, sondern gleichzeitig versucht, das Hindernis zu überwinden. Auf diese Weise ist die gesamte Struktur, die insbesondere den Rahmen 2 und die Betätigungselemente, beispielsweise die Betätigungswelle 101, die das Arbeitsgerät 200 betätigt, trägt, vor einem Rückstoß geschützt und wird nicht wesentlich beschädigt.

Mit der Rückwärtsbewegung des Arbeitsgeräts 200 und gleichzeitigem Anheben des Arbeitsgeräts 200 wird der Arbeitsablauf möglichst wenig unterbrochen und auch eine Beschädigung vermieden. Das Trägersystem 4 ist daher mit den Armen unter Zwischenschaltung eines vierten Arms 9 verbunden, an dem ein Stift 10 angeordnet ist, um den sich das gesamte Trägersystem 4 in Bezug auf eine horizontale Achse in Bezug auf den Rahmen 4 drehen kann. Dieser Stift 10 ist im Wesentlichen an der Verbindungsstelle mit dem ersten Arm 3 positioniert. Auf diese Weise kann sich das Trägersystem sowohl bezüglich einer vertikalen Achse als auch bezüglich einer horizontalen Achse bezüglich des ersten Arms 2 drehen. Vorteilhaften Weise ist zwischen dem Trägersystem 4 und dem Arbeitsgerät 200 ein Gelenk 201 zwischengeschaltet, das die Ausrichtung des Arbeitsgeräts 200 auch in Bezug auf die Arbeitsebene ermöglicht. Auf diese Weise kann das Arbeitsgerät 200 auch geneigtes Gelände bearbeiten.

Dies kann besonders nützlich sein, wenn Wiesen oder Flächen z.B. Böschungen in der Nähe einer Straße bearbeitet werden, die häufig geneigt sind und Hindernisse darstellen. Diese Hindernisse sind für den Fahrer des Fahrzeugs, insbesondere wenn sie eine geringe Höhe haben, nicht klar sichtbar, da das Gelände geneigt ist.

Das gesamte System wird mechanisch verwaltet. Dies verringert Probleme und wird viel stabiler, da es im Vergleich zu äußeren Einflüssen wie Wasser oder hohen Temperaturen, die Probleme in elektronischen Steuersystemen verursachen können, sehr stabil ist.

In einer bevorzugten Ausführungsform ist der Rahmen 2 bogenförmig ausgebildet und mittels eines Kolbens 20 ausgerichtet, der mit dem Zugfahrzeug 100 verbunden ist. Dieser Kolben ist im oberen Bereich des Bogens verbunden. Der Rahmen ist auch in bevorzugter Weise mittels zweier Arme mit dem Traktor 100 verbunden. Diese beiden Arme sind mit dem Rahmen verbunden, um eine horizontale Achse relativ zueinander drehen zu lassen. Auf diese Weise kann der Rahmen 2 gegenüber dem Fahrzeug geneigt werden.

In einer bevorzugten Ausführungsform weist das Trägersystem 4 Mittel auf, die sich in Bezug auf das Zugfahrzeug 100 seitlich erstrecken, um einen größeren Arbeitsradius zu ermöglichen.

Die zuvor beschriebenen Varianten des Mechanismus dienen nur zum besseren Verständnis der Struktur, Funktionsweise und Eigenschaften der vorgestellten Lösung; sie beschränken die Offenbarung nicht durch die Ausführungsformen. Die Figuren sind schematisch, wobei Eigenschaften und wesentliche Wirkungen teilweise deutlich vergrößert dargestellt sind, um die Funktionen, Wirkprinzipien, Konfigurationen und technischen Eigenschaften hervorzuheben. Damit kann jeder Vorgang, jedes Prinzip, jede technische Ausgestaltung und jedes Merkmal, das in den Figuren oder im Text offenbart ist, frei und in beliebiger Weise mit allen Ansprüchen, jedem Merkmal im Text und im Text kombiniert werden andere Figuren, andere Operationen, Prinzipien, Konfigurationen und technische Eigenschaften, die in dieser Offenbarung enthalten sind oder sich daraus ergeben, so dass alle denkbaren Kombinationen der beschriebenen Lösung zuzurechnen sind. Dies umfasst auch Kombinationen aller Einzelnen Details, dh in jedem Anschnittes des Textes, in den Ansprüchen sowie Kombinationen verschiedener Varianten im Text, in den Abmessungen und in den Figuren. Die zuvor dargestellten Geräte- und Prozessdetails werden in Verbindung dargestellt. Es ist jedoch darauf hinzuweisen, dass sie auch unabhängig voneinander und auch frei miteinander kombiniert werden können. Die in den Figuren der einzelnen Teile und Absätze angegebenen Verhältnisse zwischen ihnen und in ihren Abmessungen und Proportionen sind nicht als einschränkend anzusehen. Auch einzelne Maße und Proportionen können von den gezeigten abweichen. Die Ansprüche beschränken sich auch nicht die Erfassung und damit die Möglichkeit, alle vorgestellten Merkmale zu kombinieren. Alle hier vorgestellten Funktionen werden auch einzeln und in Kombination mit allen anderen Funktionen veröffentlicht.

### Liste der Referenznummern

- 1: erfindungsgemäßer Mechanismus
- 2: Rahmen
- 3: erster Arm
- 4: Trägersystem
- 5: Kolben
- 6: zweiter Arm
- 7: dritter Arm
- 9: vierter Arm
- 10: Stift
- 20: Kolben
- 100: Fahrzeug
- 101: Baum
- 200: Häcksel- / Schneidvorrichtung
- 201: Verbindung

## Patentansprüche

1. Befestigungsmechanismus (1) für eine Schneid- / Zerkleinerungsvorrichtung (200) von Pflanzenmaterial an einem Fahrzeug (100), insbesondere einem Traktor oder dergleichen, mit einem Rahmen (2), der an ein Fahrzeug (100) anschließbar ist, und ein Trägersystem (4), das an eine Schneid- / Zerkleinerungsvorrichtung (200) anschließbar ist, wobei der Rahmen (2) über mindestens drei Arme (3,6,7) mit dem Trägersystem (4) verbunden ist, wobei der erste Arm (3) mit dem Rahmen (2) verbunden und mit dem Trägersystem (4) um eine erste vertikale Achse in Bezug auf den Rahmen drehbar verbunden ist und der erste Arm (3) mittels einer drehbaren Verbindung in Bezug auf das Trägersystem (4) drehbar ist, wobei der zweite Arm (6) in Bezug auf den Rahmen (2) und das Trägersystem (4) um eine Achse in Bezug auf den Rahmen (4) drehbar und ausfahrbar ist und eine maximale Kompression in der Arbeitsposition aufweist, wobei der Befestigungsmechanismus **dadurch gekennzeichnet ist, dass** der dritte Arm (7) am Rahmen (2) und am Trägersystem (4) gegenüber dem ersten und zweiten Arm (3,6) geneigt von oben am Rahmen (2) nach unten am Trägersystem (4) angeschlossen angebracht ist und in Arbeitsstellung maximal ausgefahren ist.

2. Befestigungsmechanismus (1) nach Anspruch 1, **dadurch gekennzeichnet, dass** eine Schneid- / Zerkleinerungsvorrichtung (200) mit dem Trägersystem mittels einer Verbindung (201) verbunden ist, um die Schneid- / Zerkleinerungsvorrichtung (200) bezüglich zum Trägersystem (4) zu orientieren.

3. Befestigungsmechanismus (1) nach einem der vorhergehenden Ansprüche, **dadurch gekennzeichnet, dass** zwischen dem ersten und dem zweiten Arm (3, 6) ein ausziehbarer vierter Arm (9) angeordnet ist.

4. Befestigungsmechanismus (1) nach einem der vorhergehenden Ansprüche, **dadurch gekennzeichnet, dass** die um eine im Wesentlichen horizontale Achse drehbare Verbindung durch einen Stift (10) gebildet ist.

5. Befestigungsmechanismus (1) nach einem der vorhergehenden Ansprüche, **dadurch gekennzeichnet, dass** der erste Arm (3) von einem Kolben (5) gesteuert wird.

## Claims

1. An attachment mechanism (1) for attaching a plant material-shredding/cutting implement (200) to a vehicle (100), namely a tractor or the like, having a frame (2) adapted to be connected to a vehicle (100) and a bearing structure (4) adapted to be connected to a shredding/cutting implement (200), wherein the frame (2) is connected to the bearing structure (4) via at least three arms (3, 6, 7), wherein the first arm (3) is connected to the frame (2) and is connected to the bearing structure (4) to rotate about a vertical axis relative to the frame, and the first arm (3) rotates via a rotary joint relative to the bearing structure (4), wherein the second arm (6) is rotatable and extensible relative to the frame (2) and to the bearing structure (4) about an axis and has a maximum compression in the work position, wherein the attachment mechanism is **characterized in that** the third arm (7) is connected to the frame (2) and to the bearing structure (4) with a downward inclination from above to the frame (2) down to the bearing structure (4) with respect to the first and second arms (3, 6) and has a maximum extent in the work position.

2. An attachment mechanism (1) as claimed in claim 1, **characterized in that** the shredding/cutting implement (200) is connected to the bearing structure via a joint (201) to orient the shredding/cutting implement (200) with respect to the bearing structure (4).

3. An attachment mechanism (1) as claimed in one of the preceding claims, **characterized in that** a fourth extensible arm (9) is interposed between the first and second arms (3, 6).

4. An attachment mechanism (1) as claimed in one of the preceding claims, **characterized in that** the rotary joint for rotation about a substantially horizontal axis consists of a pivot (10).

5. An attachment mechanism (1) as claimed in one of the preceding claims **characterized in that** the first arm (3) is controlled by a piston (5).

## Revendications

1. Mécanisme de fixation (1) pour la fixation d'un outil de déchiquetage/coupe de matériaux végétaux (200) à un véhicule (100), notamment un tracteur ou similaire, ayant un châssis (2) reliable à un véhicule (100) et une structure porteuse (4) reliable à un outil de déchiquetage/coupe (200), dans lequel le châssis (2) est relié à la structure porteuse (4) au moyen d'au moins trois bras (3, 6, 7), dans lequel le premier bras (3) est relié au châssis (2) et est relié à la structure porteuse (4) de façon à tourner autour d'un axe vertical par rapport au châssis, et le premier bras (3) tourne au moyen d'un joint rotatif par rapport à la structure porteuse (4), dans lequel le deuxième bras (6) est rotatif et extensible par rapport au châssis (2) et à la structure porteuse (4) autour d'un axe et a une compression maximale en position de travail, dans lequel le mécanisme de fixation est **caractérisé en ce que** le troisième bras (7) est relié au châssis (2) et à la structure porteuse (4) avec une inclinaison vers le bas d'en haut au châssis (2) jusqu'en bas à la structure porteuse (4) par rapport au premier et au second bras (3, 6) et a une étendue maximale en position de travail.

2. Mécanisme de fixation (1) selon la revendication 1, **caractérisé en ce que** l'outil de déchiquetage/coupe (200) est relié à la structure porteuse à travers un joint (201) pour orienter l'outil de déchiquetage/coupe (200) par rapport à la structure porteuse (4).

3. Mécanisme de fixation (1) selon l'une des revendications précédentes, **caractérisé en ce qu'**un quatrième bras extensible (9) est interposé entre le premier et le deuxième bras (3, 6).

4. Mécanisme de fixation (1) selon l'une des revendications précédentes, **caractérisé en ce que** le joint rotatif pour la rotation autour d'un axe sensiblement horizontal est constitué d'un pivot (10).

5. Mécanisme de fixation selon l'une des revendications précédentes **caractérisé en ce que** le premier bras (3) est commandé par un piston (5).
